# EUROPEAN PATENT APPLICATION

(11) **EP 4 502 914 A1**
(43) Date of publication of application: **05.02.2025**
(21) Application number: 22938622.2
(22) Date of filing: 22.04.2022
(51) Int. Cl.: G06Q 50/06, H02J 3/00, H02J 7/00, G06N 3/08

(54) **ESS-BASED ARTIFICIAL INTELLIGENCE DEVICE AND ELECTRONIC DEVICE CONTROL METHOD THEREOF**

(71) Applicant: LG Electronics Inc., Yeongdeungpo-gu Seoul 07336 (KR)
(72) Inventor: KIM, Jaehong, Seoul 06772 (KR); LEE, Kamin, Seoul 06772 (KR)
(74) Representative: Vossius & Partner Patentanwälte Rechtsanwälte mbB
(86) International application number: PCT/KR2022/005810
(87) International publication number: WO 2023/204331

(57) **Abstract**

The present disclosure relates to an artificial intelligence device and method capable of efficiently controlling electronic devices in a home based on an ESS (Energy Storage System), can obtain operation reservation information for a pre-registered electronic device, estimate an operation schedule time zone of the corresponding electronic device from the obtained operation reservation information, predict a power status corresponding to the estimated operation schedule time zone, determines an operation time zone with high power usage efficiency among the operation schedule time zones based on the predicted power status, and adjust the operation schedule time zone of the electronic device based on the operation time zone with high power usage efficiency.

## Description

### [Technical Field]

The present disclosure relates to an artificial intelligence apparatus capable of efficiently controlling electronic devices in a home based on an Energy Storage System (ESS) and a method thereof.

### [Background Art]

In general, an energy storage system (ESS) refers to an apparatus that improves power usage efficiency by storing energy produced from renewable energy sources such as solar and wind power in a storage device (for example, a battery) and then supplying electricity when needed.

For these energy storage systems (ESS), it is important to accurately predict the amount of power consumption occurring in a home to improve energy efficiency.

In this way, in order to efficiently operate electronic devices in a home, it is necessary to utilize not only external environmental information but also energy storage status and power information in a home.

### [Disclosure]

### [Technical Problem]

An object of the present disclosure is to solve the above-mentioned problems and other problems.

An object of the present disclosure is to provide an artificial intelligence apparatus capable of efficiently operating electronic devices by predicting a power status corresponding to an operation schedule time zone of an electronic device and determining an operation time zone with high power usage efficiency.

In addition, an object of the present disclosure is to provide an artificial intelligence apparatus capable of operating electronic devices to maximize energy efficiency according to the energy status of each home by adjusting the operation schedule time of electronic devices based on the operation time zone with high power usage efficiency.

In addition, an object of the present disclosure is to provide an artificial intelligence apparatus capable of recommending an optimized method for charging an electronic device by obtaining power information for charging an electronic device and determining a charging time zone and charging location with high charging efficiency.

### [Technical Solution]

An artificial intelligence apparatus according to an embodiment of the present disclosure includes a memory storing a power status; and, a processor controlling an electronic device based on the power status, in which the processor can obtain operation reservation information for a pre-registered electronic device, estimate an operation schedule time zone of the corresponding electronic device from the obtained operation reservation information, predict a power status corresponding to the estimated operation schedule time zone, determines an operation time zone with high power usage efficiency among the operation schedule time zones based on the predicted power status, and adjust the operation schedule time zone of the electronic device based on the operation time zone with high power usage efficiency.

A method for controlling an artificial intelligence apparatus using an electronic device according to an embodiment of the present disclosure may include obtaining operation reservation information for a pre-registered electronic device; estimating an operation schedule time zone of the electronic device from the obtained operation reservation information; predicting a power status corresponding to the estimated operation schedule time zone; determining an operation time zone with high power usage efficiency among the operation schedule time zones based on the predicted power status; and adjusting an operation schedule time zone of the electronic device based on the operation time zone with high power usage efficiency.

### [Advantageous Effect]

According to one embodiment of the present disclosure, an artificial intelligence apparatus can efficiently operate electronic devices by predicting a power state corresponding to an operation schedule time zone of an electronic device and determining an operation time zone with high power usage efficiency.

In addition, according to one embodiment of the present disclosure, the artificial intelligence apparatus can operate electronic devices to maximize energy efficiency according to the energy status in each home by adjusting the operation schedule time of the electronic devices based on the operation time zone with high power usage efficiency.

In addition, according to one embodiment of the present disclosure, the artificial intelligence apparatus can obtain power information for charging an electronic device and determine a charging time zone and charging location with high charging efficiency, thereby recommending an optimized method for charging an electronic device.

### [Description of Drawings]

FIG. 1 illustrates an artificial intelligence apparatus according to an embodiment of the present disclosure.
FIG. 2 illustrates an artificial intelligence server according to an embodiment of the present disclosure.
FIG. 3 illustrates an artificial intelligence apparatus applied to an energy storage system according to one embodiment of the present disclosure.
FIG. 4 is a view for explaining an electronic device registration process according to one embodiment of the present disclosure.
FIG. 5 is a view for explaining a process for obtaining operation reservation information of an electronic device according to one embodiment of the present disclosure.
FIG. 6 is a view for explaining a process for determining an optimal operation time zone and an optimal charging time zone of an electronic device according to one embodiment of the present disclosure.
FIG. 7 is a view for explaining a power state prediction process of a neural network model according to an embodiment of the present disclosure.
FIG. 8 is a view for explaining a process for changing the operation schedule time zone of an electronic device according to one embodiment of the present disclosure.
FIG. 9 is a view for explaining a process for providing recommendation information of an electronic device according to one embodiment of the present disclosure.
FIGS. 10 and 11 are flowcharts for explaining a method for controlling an electronic device using an artificial intelligence apparatus according to one embodiment of the present disclosure.

### [Best Model

Hereinafter, embodiments of the present disclosure are described in more detail with reference to accompanying drawings and regardless of the drawings symbols, same or similar components are assigned with the same reference numerals and thus overlapping descriptions for those are omitted. The suffixes "module" and "unit" for components used in the description below are assigned or mixed in consideration of easiness in writing the specification and do not have distinctive meanings or roles by themselves. In the following description, detailed descriptions of well-known functions or constructions will be omitted since they would obscure the disclosure in unnecessary detail. Additionally, the accompanying drawings are used to help easily understanding embodiments disclosed herein but the technical idea of the present disclosure is not limited thereto. It should be understood that all of variations, equivalents or substitutes contained in the concept and technical scope of the present disclosure are also included.

It will be understood that the terms "first" and "second" are used herein to describe various components but these components should not be limited by these terms. These terms are used only to distinguish one component from other components.

In this disclosure below, when one part (or element, device, etc.) is referred to as being 'connected' to another part (or element, device, etc.), it should be understood that the former can be 'directly connected' to the latter, or 'electrically connected' to the latter via an intervening part (or element, device, etc.). It will be further understood that when one component is referred to as being 'directly connected' or 'directly linked' to another component, it means that no intervening component is present.

Also, throughout this specification, a neural network and a network function may be used interchangeably. The neural network may be constituted by a set of interconnected computational units, which may be generally referred to as "nodes". These "nodes" may also be referred to as "neurons". The neural network is configured to include at least two or more nodes. Nodes (or neurons) constituting neural networks may be interconnected by one or more "links".

### <Artificial Intelligence (Al)>

Artificial intelligence refers to the field of studying artificial intelligence or methodology for making artificial intelligence, and machine learning refers to the field of defining various issues dealt with in the field of artificial intelligence and studying methodology for solving the various issues. Machine learning is defined as an algorithm that enhances the performance of a certain task through a steady experience with the certain task.

An artificial neural network (ANN) is a model used in machine learning and may mean a whole model of problem-solving ability which is composed of artificial neurons (nodes) that form a network by synaptic connections. The artificial neural network can be defined by a connection pattern between neurons in different layers, a learning process for updating model parameters, and an activation function for generating an output value.

The artificial neural network may include an input layer, an output layer, and optionally one or more hidden layers. Each layer includes one or more neurons, and the artificial neural network may include a synapse that links neurons to neurons. In the artificial neural network, each neuron may output the function value of the activation function for input signals, weights, and deflections input through the synapse.

Model parameters refer to parameters determined through learning and include a weight value of synaptic connection and deflection of neurons. A hyperparameter means a parameter to be set in the machine learning algorithm before learning, and includes a learning rate, a repetition number, a mini batch size, and an initialization function.

The purpose of the learning of the artificial neural network may be to determine the model parameters that minimize a loss function. The loss function may be used as an index to determine optimal model parameters in the learning process of the artificial neural network.

Machine learning may be classified into supervised learning, unsupervised learning, and reinforcement learning according to a learning method.

The supervised learning may refer to a method of training an artificial neural network in a state in which a label for learning data is given, and the label may mean the correct answer (or result value) that the artificial neural network must infer when the learning data is input to the artificial neural network. The unsupervised learning may refer to a method of training an artificial neural network in a state in which a label for learning data is not given. The reinforcement learning may refer to a learning method in which an agent defined in a certain environment learns to select a behavior or a behavior sequence that maximizes cumulative compensation in each state.

Machine learning, which is implemented as a deep neural network (DNN) including a plurality of hidden layers among artificial neural networks, is also referred to as deep learning, and the deep learning is part of machine learning. In the following, machine learning is used to mean deep learning.

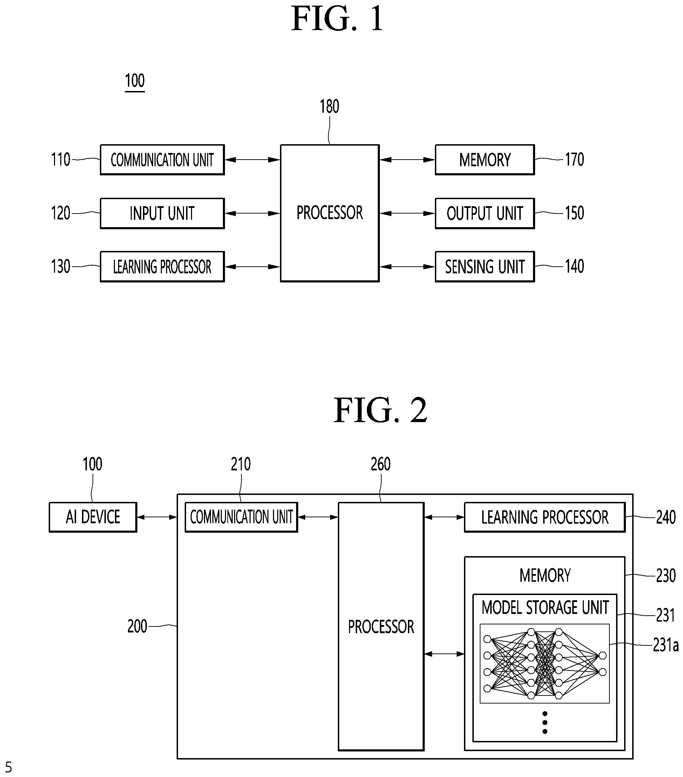

FIG. 1 illustrates an AI device 100 according to an embodiment of the present disclosure.

The AI device (or an AI apparatus) 100 may be implemented by a stationary device or a mobile device, such as a TV, a projector, a mobile phone, a smartphone, a desktop computer, a notebook, a digital broadcasting terminal, a personal digital assistant (PDA), a portable multimedia player (PMP), a navigation device, a tablet PC, a wearable device, a set-top box (STB), a DMB receiver, a radio, a washing machine, a refrigerator, a desktop computer, a digital signage, a robot, a vehicle, and the like.

Referring to FIG. 1, the AI device 100 may include a communication unit 110, an input unit 120, a learning processor 130, a sensing unit 140, an output unit 150, a memory 170, and a processor 180.

The communication unit 110 may transmit and receive data to and from external devices such as other AI devices 100a to 100e and the AI server 200 by using wire/wireless communication technology. For example, the communication unit 110 may transmit and receive sensor information, a user input, a learning model, and a control signal to and from external devices.

The communication technology used by the communication unit 110 includes GSM (Global System for Mobile communication), CDMA (Code Division Multi Access), LTE (Long Term Evolution), 5G, WLAN (Wireless LAN), Wi-Fi (Wireless-Fidelity), Bluetooth^{™}, RFID (Radio Frequency Identification), Infrared Data Association (IrDA), ZigBee, NFC (Near Field Communication), and the like.

The input unit 120 may acquire various kinds of data.

In this case, the input unit 120 may include a camera for inputting a video signal, a microphone for receiving an audio signal, and a user input unit for receiving information from a user. The camera or the microphone may be treated as a sensor, and the signal obtained from the camera or the microphone may be referred to as sensing data or sensor information.

The input unit 120 may acquire a learning data for model learning and an input data to be used if an output is obtained by using learning model. The input unit 120 may acquire raw input data. In this case, the processor 180 or the learning processor 130 may extract an input feature by preprocessing the input data.

The learning processor 130 may learn a model composed of an artificial neural network by using learning data. The learned artificial neural network may be referred to as a learning model. The learning model may be used to an infer result value for new input data rather than learning data, and the inferred value may be used as a basis for determination to perform a certain operation.

At this time, the learning processor 130 may perform AI processing together with the learning processor 240 of the AI server 200 of FIG. 2.

At this time, the learning processor 130 may include a memory integrated or implemented in the AI device 100. Alternatively, the learning processor 130 may be implemented by using the memory 170, an external memory directly connected to the AI device 100, or a memory held in an external device.

The sensing unit 140 may acquire at least one of internal information about the AI device 100, ambient environment information about the AI device 100, and user information by using various sensors.

Examples of the sensors included in the sensing unit 140 may include a proximity sensor, an illuminance sensor, an acceleration sensor, a magnetic sensor, a gyro sensor, an inertial sensor, an RGB sensor, an IR sensor, a fingerprint recognition sensor, an ultrasonic sensor, an optical sensor, a microphone, a lidar, and a radar.

The output unit 150 may generate an output related to a visual sense, an auditory sense, or a haptic sense.

At this time, the output unit 150 may include a display unit for outputting time information, a speaker for outputting auditory information, and a haptic module for outputting haptic information.

The memory 170 may store data that supports various functions of the AI device 100. For example, the memory 170 may store input data obtained by the input unit 120, learning data, a learning model, a learning history, and the like.

The processor 180 may determine at least one executable operation of the AI device 100 based on information determined or generated by using a data analysis algorithm or a machine learning algorithm. The processor 180 may control the components of the AI device 100 to execute the determined operation.

To this end, the processor 180 may request, search, receive, or utilize data of the learning processor 130 or the memory 170. The processor 180 may control the components of the AI device 100 to execute the predicted operation or the operation determined to be desirable among the at least one executable operation.

When the connection of an external device is required to perform the determined operation, the processor 180 may generate a control signal for controlling the external device and may transmit the generated control signal to the external device.

The processor 180 may acquire intention information for the user input and may determine the user's requirements based on the obtained intention information.

The processor 180 may acquire the intention information corresponding to the user input by using at least one of a speech to text (STT) engine for converting speech input into a text string or a natural language processing (NLP) engine for acquiring intention information of a natural language.

At least one of the STT engine or the NLP engine may be configured as an artificial neural network, at least part of which is learned according to the machine learning algorithm. At least one of the STT engine or the NLP engine may be learned by the learning processor 130, may be learned by the learning processor 240 of the AI server 200, or may be learned by their distributed processing.

The processor 180 may collect history information including the operation contents of the AI apparatus 100 or the user's feedback on the operation and may store the collected history information in the memory 170 or the learning processor 130 or transmit the collected history information to the external device such as the AI server 200. The collected history information may be used to update the learning model.

The processor 180 may control at least part of the components of AI device 100 so as to drive an application program stored in the memory 170. Furthermore, the processor 180 may operate two or more of the components included in the AI device 100 in combination so as to drive the application program.

FIG. 2 illustrates an AI server 200 according to an embodiment of the present disclosure.

Referring to FIG. 2, the AI server 200 may refer to a device that learns an artificial neural network by using a machine learning algorithm or uses a learned artificial neural network/ The AI server 200 may include a plurality of servers to perform distributed processing or may be defined as a 5G network. In this case, the AI server 200 may be included as a partial configuration of the AI device 100, and may perform at least part of the AI processing together.

The AI server 200 may include a communication unit 210, a memory 230, a learning processor 240, a processor 260, and the like.

The communication unit 210 may transmit and receive data to and from an external device such as the AI device 100.

The memory 230 may include a model storage unit 231. The model storage unit 231 may store a learning or learned model (or an artificial neural network 231a) through the learning processor 240.

The learning processor 240 may learn the artificial neural network 231a by using the learning data. The learning model may be used in a state of being mounted on the AI server 200 of the artificial neural network, or may be used in a state of being mounted on an external device such as the AI device 100.

The learning model may be implemented in hardware, software, or a combination of hardware and software. If all or part of the learning models are implemented in software, one or more instructions that constitute the learning model may be stored in memory 230.

The processor 260 may infer the result value for new input data by using the learning model and may generate a response or a control command based on the inferred result value.

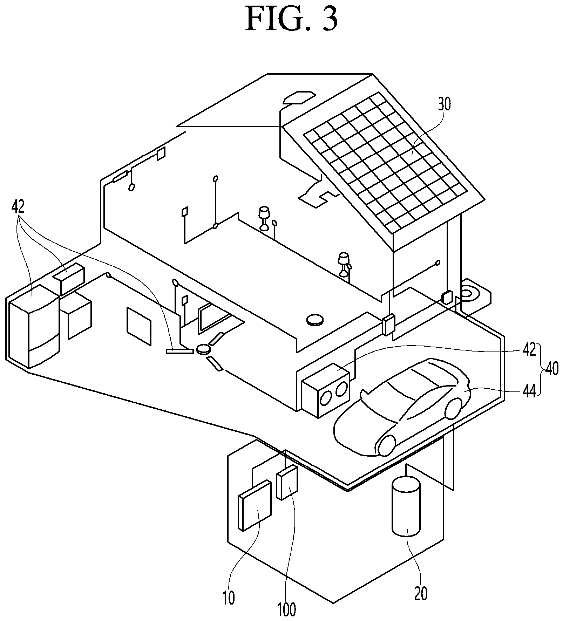

FIG. 3 illustrates an artificial intelligence apparatus applied to an energy storage system (ESS) according to one embodiment of the present disclosure.

As illustrated in FIG. 3, the energy storage system may include a battery module 10 including a plurality of battery cells, a power storage 20, a power generation plant 30 including solar panels, and an artificial intelligence apparatus 100 that predicts an amount of power consumption occurring in a home.

The artificial intelligence apparatus 100 may include a memory that stores the power status in a home and a processor that controls an electronic device 40 based on the power status.

Here, the electronic devices 40 may include stationary electronic devices 42 such as refrigerators, washing machines, lights, and ventilators, and mobile electronic devices 44 including batteries such as electric vehicles, electric bikes, and robot vacuum cleaners.

In addition, the mobile electronic device 44 may include an electronic device that cannot be moved outside, such as a robot vacuum cleaner, and an electronic device that can be moved outside, such as an electric vehicle.

In addition, the processor of the artificial intelligence apparatus 100 can obtain operation reservation information for a pre-registered electronic device 40, estimate an operation schedule time zone of the corresponding electronic device from the obtained operation reservation information, predict a power status corresponding to the estimated operation schedule time zone, determine an operation time zone with high power usage efficiency among the operation schedule time zone based on the predicted power status, and adjust the operation schedule time zone of the electronic device based on the operation time zone with high power usage efficiency.

Here, when obtaining operation reservation information for a pre-registered electronic device, the processor can obtain operation reservation information including at least one of an operation schedule date, an operation schedule time, a number of operations, an operation motion time, and operation motion intensity for the pre-registered electronic device.

For example, the processor can perform a communication connection with a pre-registered electronic device 40 and obtain operation reservation information from the electronic device to which the communication is connected.

As another example, the processor can receive operation reservation information for a pre-registered electronic device from a user terminal, store the received operation reservation information in memory, and obtain operation reservation information for the pre-registered electronic device from the memory.

As another example, the operation reservation information of a pre-registered electronic device 40 is input by user input through a user interface, the processor can store the input operation reservation information in the memory and obtain the operation reservation information for the pre-registered electronic device from the memory.

In addition, the processor can periodically obtain operation reservation information for a pre-registered electronic device 40 to check whether there is new operation reservation information or whether there is a change to existing operation reservation information.

Here, when periodically obtaining operation reservation information, if a specific date and a specific time for obtaining operation reservation information are preset, the processor can periodically obtain operation reservation information for a pre-registered electronic device whenever the preset specific date and specific time arrive.

Next, when obtaining the operation reservation information, the processor checks whether there is an electronic device for which the operation reservation information has not been obtained, and if there is an electronic device for which the operation reservation information has not been obtained, obtains the charging status information of the corresponding electronic device, and can determine a charging time zone with high charging efficiency based on the charging status of the electronic device.

Here, the processor, when determining a charging time zone with high charging efficiency, can check whether the electronic device is a wired/wireless electronic device that can be used both wired and wirelessly, and if it is a wired/wireless electronic device, can additionally determine a discharge method with high battery efficiency of the wired/wireless electronic device among the wired discharge method and the wireless discharge method.

For example, the processor may select a wired discharge method if it is determined that operating the electronic device wiredly is more battery efficient based on the battery usage characteristics of the wired/wireless electronic device, and may select a wireless discharge method if it is determined that operating the electronic device wirelessly is more battery efficient.

In addition, when acquiring information on the charging status of an electronic device, if there is an electronic device for which operation reservation information has not been obtained, the processor can check whether the electronic device is a mobile electronic device including a battery, and if it is a mobile electronic device including a battery, acquire information on the battery charging status of the electronic device.

Here, the processor can determine a charging time zone with high charging efficiency based on power remaining amount information of the electronic device, environmental information, power production information of a home power generation facility, power remaining amount information of a home power storage facility, power rate information, external charging station location information, and power rate information of an external charging station when determining a charging time zone with high charging efficiency.

For example, the processor may determine whether the electronic device needs to be charged based on the remaining power information of the electronic device, and if the electronic device needs to be charged, check whether the electronic device is an electronic device that cannot be moved outside, and if the electronic device is an electronic device that cannot be moved outside, determine a charging time zone with high charging efficiency based on environmental information, power production information of a home power generation facility, remaining power information of a home power storage facility, and power rate information.

In other words, when determining a charging time zone with high charging efficiency, the processor can predict a power production time zone with high power production efficiency based on environmental information and power production information of a home power generation facility, estimate a time zone with the lowest power rate based on the predicted power production time zone and the remaining power amount information of a home power storage facility and power rate information, and determine a time zone with the lowest estimated power rate as a charging time zone with high charging efficiency.

In addition, the processor, when determining a charging time zone with high charging efficiency, can provide recommendation information including the cheapest charging time zone to at least one of the user terminal and an electronic device that cannot be moved outside.

As another example, the processor can determine whether the electronic device needs to be charged based on the remaining power information of the electronic device, and if the electronic device needs to be charged, check whether the electronic device is an electronic device that can be moved outside, and if the electronic device is an electronic device that can be moved outside, determine a charging time zone and charging location with high charging efficiency based on the remaining power information of the home power storage facility, power rate information, external charging station location information, and power rate information of the external charging station.

In other words, the processor, when determining a charging time zone and charging location with high charging efficiency, can calculate a first power rate corresponding to charging inside the home by hour based on power remaining amount information and power rate information of a home power storage facility, calculate a second power rate corresponding to charging outside the home by hour based on external charging station location information and power rate information of the external charging station, estimate the cheapest charging time zone and charging location by comparing the first and second power rates calculated by hour, and determine the estimated cheapest charging time zone and charging location as a charging time zone and charging location with high charging efficiency.

At this time, the processor may calculate the second power rate by weighting the distance value between the external movable electronic device and the external charging station when calculating the second power rate by time.

In addition, the processor, when determining a charging time zone and charging location with high charging efficiency, can provide recommendation information including the cheapest charging time zone and charging location to at least one of the user terminal and the electronic device that can be moved outside.

Next, the processor, when estimating the operation schedule time zone of the electronic device, can first check whether the obtained operation reservation information includes the operation schedule time of the electronic device, and if the operation schedule time of the electronic device is included, estimate the operation schedule time zone of the electronic device based on the operation schedule time, and if the operation schedule time of the electronic device is not included, secondarily check whether the obtained operation reservation information includes the operation schedule date of the electronic device, and if the operation schedule date of the electronic device is included, estimate the operation schedule time zone of the electronic device based on the operation schedule date, and if the operation schedule date of the electronic device is not included, estimate the operation schedule time zone based on the operation pattern information of the electronic device.

Here, the processor, when estimating an operation schedule date based on the operation pattern information of the electronic device, can obtain the operation pattern information of the electronic device, extract a usage pattern including the number of times the electronic device is used, the usage time of the electronic device, and the usage cycle of the electronic device from the operation pattern information, and estimate an operation schedule date based on the extracted usage pattern.

At this time, the processor, when obtaining operation pattern information of an electronic device, can perform a communication connection with a pre-registered electronic device, store operation data received from the electronic device to which communication is connected in a memory, and obtain operation pattern information for the electronic device based on the operation data stored in the memory.

Next, the processor, when predicting a power status, can obtain external environment data including weather, temperature, and seasonal data corresponding to the estimated operation schedule time zone, input the external environment data, the operation schedule time data, and the power consumption data of the pre-registered electronic device into a pre-learned neural network model and thus predict a power status corresponding to the operation schedule time zone.

Here, the predicted power status may include an amount of power production, an amount of power consumption, and power purchase price in a home corresponding to the operation schedule time zone.

For example, the processor, when predicting a power condition, can predict a power power status including an amount of power production, an amount of power consumption, and power purchase price in a home at least in one cycle of hourly, minutely, and secondly among the operation schedule time zones.

In addition, the power consumption data of the pre-registered electronic device may include energy information and usage pattern information for the pre-registered electronic device.

Here, the energy information may include at least one of the rated voltage, power consumption, and energy consumption efficiency of the electronic device, and the usage pattern information may include at least one of the number of times the electronic device is used, the usage time of the electronic device, the usage cycle of the electronic device, the usage function of the electronic device, the number of times a specific function is used, the usage time of a specific function, and the usage cycle of a specific function.

Next, the processor, when determining an operation time zone with high power usage efficiency, can determine an operation time zone with high power usage efficiency among the operation schedule time zones based on at least one of a first condition corresponding to an amount of power production in a home, a second condition corresponding to an amount of power consumption in a home, and a third condition corresponding to the power purchase price.

Here, the processor may determine, based on a first condition, a time zone with a large amount of power production among the operation schedule time zones as an operation time zone with high power usage efficiency, based on a second condition, a time zone with a small amount of power consumption among the operation schedule time zones as an operation time zone with high power usage efficiency, and based on a third condition, a time zone with low power purchase price among the operation schedule time zones as an operation time zone with high power usage efficiency.

Additionally, the processor, when determining an operation time zone with high power efficiency, can determine an operation time zone with high power efficiency among the operation schedule time zones based on a fourth condition corresponding to the user's schedule and activity pattern.

Here, the processor can determine, based on the fourth condition, a time zone during which the user is not at home among the operation schedule time zones as an operation time zone with high power usage efficiency.

Next, the processor, when adjusting the operation schedule time zone of the electronic device, can compare the operation time zone with high power usage efficiency with the operation schedule time of the electronic device, and if the operation time zone with high power usage efficiency is different from the operation schedule time of the electronic device, the operation schedule time zone of the electronic device can be changed to the operation time zone of the electronic device with the high power usage efficiency.

In some cases, the processor may maintain the operation schedule time zone of the electronic device without changing if the operation schedule time zone of the electronic device is the same as the operation time zone with high power efficiency.

Additionally, the processor may transmit change notification information to at least one of the electronic device and the user terminal when the operation schedule time zone of the electronic device changes.

Next, the processor can check whether the operation schedule time zone for high power usage efficiency has arrived when the operation schedule time zone of the electronic device has changed to the operation time zone for high power usage efficiency, and if the operation schedule time zone for high power usage efficiency has arrived, control the operation of the corresponding electronic device based on the operation reservation information stored in advance.

Throughout this specification, the terms neural network, network function and neural network may be used interchangeably.

The neural network model described above may be an artificial neural network (ANN) trained to output reconstructed data that is similar to the input data for the input data. An artificial neural network (ANN) is a model used in machine learning, and may refer to the overall model that has problem-solving capabilities and is composed of artificial neurons (nodes) that form a network by combining synapses.

For example, the neural network model may be an artificial neural network model based on an autoencoder. The neural network model based on an autoencoder may include, but is not limited to, an encoder part that reduces the dimensionality of data by making the number of neurons in the hidden layer smaller than the number of neurons in the input layer, and a decoder part that reconstructs the data by expanding the dimensionality of data from the hidden layer again, and has an output layer having the same number of neurons as the number of neurons in the input layer.

In addition, the neural network model may be an artificial neural network model based on a generative adversarial network (GAN). A generative adversarial network (GAN) may be an artificial neural network in which a generator and a discriminator are learned adversarially, but is not limited thereto.

In addition, the neural network model may be a deep neural network. A deep neural network (DNN) may refer to a neural network that includes a plurality of hidden layers in addition to an input layer and an output layer. Using a deep neural network, latent structures of data can be identified. In other words, potential structures of photos, text, videos, voices, and music (for example, what objects are in the photo, what the content and emotion of the text are, what the content and emotion of the voice are, or the like) can be identified. A deep neural network may include a convolutional neural network (CNN), a recurrent neural network (RNN), a restricted Boltzmann machine (RBM), a deep belief network (DBN), a Q network, a U network, a Siamese network, or the like

In this way, the artificial intelligence apparatus of the present disclosure can efficiently operate electronic devices by predicting a power status corresponding to the operation schedule time zone of the electronic device and determining an operation time zone with high power usage efficiency.

In addition, the artificial intelligence apparatus of the present disclosure can operate electronic devices to maximize energy efficiency according to the energy status of each home by adjusting the operation schedule time of electronic devices based on the operation time zone with high power usage efficiency.

In addition, the artificial intelligence apparatus of the present disclosure can obtain power information for charging an electronic device and determine a charging time zone and charging location with high charging efficiency, thereby recommending an optimized method for charging an electronic device.

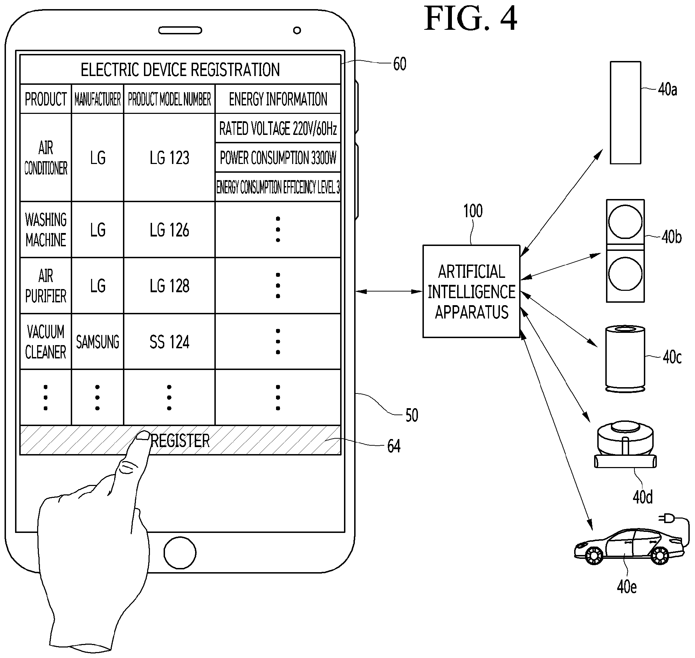

FIG. 4 is a view for explaining an electronic device registration process according to one embodiment of the present disclosure.

As illustrated in FIG. 4, the artificial intelligence apparatus 100 can receive a registration request for electronic devices to be controlled from a user terminal 50.

Here, the user terminal 50 can display an electronic device registration window 60 on the display screen through an electronic device integrated app, register a number of electronic devices to be controlled through the electronic device registration window 60, and then provide information on the registered electronic devices to the artificial intelligence apparatus 100.

In some cases, the artificial intelligence apparatus 100 may also receive user input for a request to register an electronic device through a user interface.

In another case, the artificial intelligence apparatus 100 may obtain product information from electronic devices capable of communication within the home, obtain corresponding energy information from an external server, and then automatically provide the product information and energy information of the obtained electronic devices to a registration window 60 displayed on the user terminal 50.

In this case, the user can simply and quickly input only product information about the electronic device that is not obtained from the artificial intelligence apparatus 100 through the registration window 60 displayed on the user terminal 50.

For example, an artificial intelligence apparatus 100 can obtain product information from air conditioners and washing machines that are capable of communicating within a home and are manufactured by the same manufacturer, obtain corresponding energy information from the server of the manufacturer, and then automatically provide product information and energy information of the obtained electronic device to a registration window 60 displayed on a user terminal 50.

In addition, the user can register the electric vehicle and vacuum cleaner by entering only product information on electric vehicles and vacuum cleaners of other manufacturers that are not obtained by the artificial intelligence apparatus 100 through the registration window 60 displayed on the user terminal 50.

Next, the user terminal 50 can register product information on electric vehicles and vacuum cleaners by transmitting the information to the artificial intelligence apparatus 100 through user input by touching the registration button 64 of the registration window 60.

Here, the artificial intelligence apparatus 100 can communicate with an external server using only the product model number among the product information for the electric vehicle and vacuum cleaner to additionally obtain energy information of the electric vehicle and vacuum cleaner corresponding to the product model number, thereby estimating power consumption data such as usage patterns.

The artificial intelligence apparatus 100 can obtain power consumption data including energy information and usage pattern information for pre-registered electronic devices.

For example, the energy information may include at least one of the rated voltage, power consumption, and energy consumption efficiency of electronic devices, including an air conditioner 40a, a washing machine 40b, an air purifier 40c, a vacuum cleaner 40d, and an electric vehicle 40e.

In addition, the usage pattern information may include at least one of the number of times the electronic device is used, the usage time of the electronic device, the usage cycle of the electronic device, the usage function of the electronic device, the number of times a specific function is used, the usage time of a specific function, and the usage cycle of a specific function.

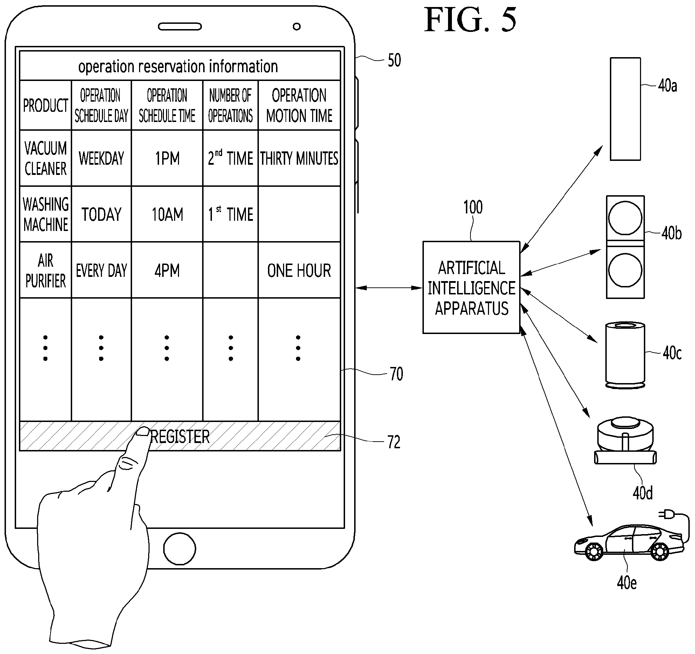

FIG. 5 is a view for explaining a process for obtaining operation reservation information of an electronic device according to one embodiment of the present disclosure.

As illustrated in FIG. 5, the artificial intelligence apparatus 100 can obtain operation reservation information for a pre-registered electronic device.

Here, the artificial intelligence apparatus 100 can obtain operation reservation information including at least one of an operation schedule date, an operation schedule time, a number of operations, an operation motion time, and operation motion intensity for a pre-registered electronic device.

The artificial intelligence apparatus 100 can perform a communication connection with a pre-registered electronic device and obtain operation reservation information from the electronic device to which the communication is connected.

For example, the artificial intelligence apparatus 100 can individually perform communication connections with pre-registered electronic devices, including an air conditioner 40a, a washing machine 40b, an air purifier 40c, a vacuum cleaner 40d, and an electric vehicle 40e, and obtain operation reservation information from each of the electronic devices connected to the communication.

In some cases, the artificial intelligence apparatus 100 may receive operation reservation information for a pre-registered electronic device from a user terminal 50, store the received operation reservation information in memory, and obtain operation reservation information for the pre-registered electronic device from the memory.

Here, the user terminal 50 can display an electronic device operation reservation window 70 on the display screen through an electronic device integrated app, register a number of electronic devices whose operation is to be controlled at the operation reservation time through the electronic device operation reservation window 70, and then provide operation reservation information of the electronic devices to the artificial intelligence apparatus 100.

For example, a user terminal 50 can input operation reservation information including a operation schedule date, operation schedule time, number of operations, operation motion time, operation motion intensity, or the like corresponding to an electronic device to be controlled through an electronic device operation reservation window 70, and provide the operation reservation information to an artificial intelligence apparatus 100 through a user input of touching a reservation button 72 of the operation reservation window 70.

In another case, when operation reservation information of a pre-registered electronic device is input by a user input through a user interface, the artificial intelligence apparatus 100 may store the input operation reservation information in memory and obtain operation reservation information for the pre-registered electronic device from the memory.

In addition, the artificial intelligence apparatus 100 can periodically obtain operation reservation information for pre-registered electronic devices to check whether new operation reservation information exists or whether existing operation reservation information has changed.

Here, the artificial intelligence apparatus 100 can obtain operation reservation information for a pre-registered electronic device periodically whenever the preset specific date and specific time arrive when a specific date and specific time for obtaining operation reservation information are set in advance.

In addition, the artificial intelligence apparatus 100 can check whether there is an electronic device for which operation reservation information has not been obtained, and if there is an electronic device for which operation reservation information has not been obtained, obtain information on the charging status of the corresponding electronic device, and determine a charging time zone with high charging efficiency based on the charging status of the electronic device.

In addition, the artificial intelligence apparatus 100 can check whether the electronic device is a wired/wireless electronic device that can be used both wired and wirelessly, and if it is a wired/wireless electronic device, it can also determine which discharge method has the highest battery efficiency among the wired discharge method and the wireless discharge method.

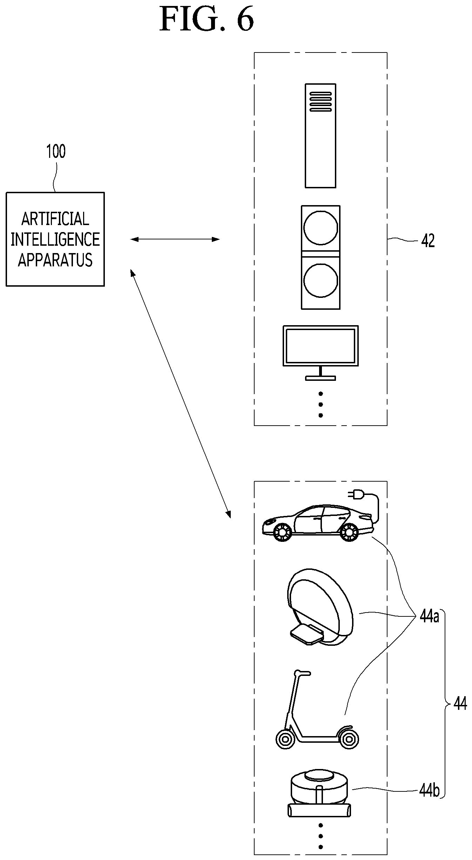

FIG. 6 is a view for explaining a process for determining an optimal operation time zone and an optimal charging time zone of an electronic device according to one embodiment of the present disclosure.

As illustrated in FIG. 6, the artificial intelligence apparatus 100 can estimate the operation schedule time zone of an electronic device from the operation reservation information of the electronic device, predict a power status corresponding to the estimated operation schedule time, and determine an operation time zone with high power usage efficiency among the operation schedule time zones based on the predicted power status.

The artificial intelligence apparatus 100 can estimate the operation schedule time zone of a stationary electronic device 42 and a mobile electronic device 44 from the operation reservation information of the corresponding electronic device.

Here, the mobile electronic device 44 may include an electronic device 44b that cannot be moved outside, such as a robot vacuum cleaner, and an electronic device 44a that can be moved outside, such as an electric vehicle, an electric wheel, a kickboard, or the like.

The artificial intelligence apparatus 100 can first check whether the obtained operation reservation information includes the operation schedule time of the electronic device, and if the operation schedule time of the electronic device is included therein, the operation schedule time zone of the electronic device can be estimated based on the operation schedule time, and if the operation schedule time of the electronic device is not included therein, the artificial intelligence apparatus can secondarily checks whether the obtained operation reservation information includes the operation schedule date of the electronic device, and if the operation schedule date of the electronic device is included therein, the operation schedule time zone of the electronic device can be estimated based on the operation schedule date, and if the operation schedule date of the electronic device is not included therein, the operation schedule time zone can be estimated based on the operation pattern information of the electronic device.

Here, the operation pattern information of the electronic device may include a usage pattern including the number of times the electronic device is used, the usage time of the electronic device, and the usage cycle of the electronic device.

In addition, the artificial intelligence apparatus 100 can obtain external environment data including weather, temperature and seasonal data corresponding to the estimated operation schedule time zone, and input the external environment data, operation schedule time data, and power consumption data of pre-registered electronic devices into a pre-learned neural network model to predict the power status corresponding to the operation schedule time.

Here, the predicted power status may include an amount of power production, an amount of power consumption, and power purchase price in a home corresponding to the operation schedule time zone.

Next, the artificial intelligence apparatus 100 can determine an operation time zone with high power usage efficiency among the operation schedule time zones based on at least one of a first condition corresponding to the amount of power production in a home, a second condition corresponding to the amount of power consumption in a home, and a third condition corresponding to the power purchase price.

Here, the artificial intelligence apparatus 100 can determine, based on the first condition, a time zone with a large amount of power production among the operation schedule time zones as a time zone with high power usage efficiency, based on the second condition, a time zone with a small amount of power consumption among the operation schedule time zones as a time zone with high power usage efficiency, and based on the third condition, a time zone with a low power purchase price among the operation schedule time zones as a time zone with high power usage efficiency.

Additionally, the artificial intelligence apparatus 100 may determine an operation time zone with high power usage efficiency among the operation schedule time zones based on a fourth condition corresponding to the user's schedule and activity pattern.

Here, the artificial intelligence apparatus 100 can determine, based on the fourth condition, a time zone during which the user is not at home among the operation schedule time zones as an operation time zone with high power usage efficiency.

In addition, the artificial intelligence apparatus 100 can obtain charging status information of the electronic device and determine a charging time zone with high charging efficiency based on the charging status of the electronic device.

In addition, the artificial intelligence apparatus 100 can additionally determine a discharge method with high battery efficiency of the wired/wireless electronic device among the wired discharge method and the wireless discharge method if the electronic device is a wired/wireless electronic device that can be used both wired and wirelessly.

For example, the artificial intelligence apparatus 100 can select a wired discharge method if it is determined that operating the electronic device wiredly has higher battery efficiency based on the battery usage characteristics of the wired/wireless electronic device, and may select a wireless discharge method if it is determined that operating the electronic device wirelessly has higher battery efficiency.

In addition, the artificial intelligence apparatus 100 can determine a charging time zone with high charging efficiency based on the remaining power information of the electronic device 44, environmental information, power production information of a home power generation facility, remaining power information of a home power storage facility, power rate information, location information of an external charging station, and power rate information of an external charging station, for a mobile electronic device 44 containing a battery.

For example, if the electronic device is an electronic device 44b that cannot be moved outside, the artificial intelligence apparatus 100 can determine a charging time zone with high charging efficiency based on environmental information, power production information of a home power generation facility, power remaining amount information of a home power storage facility, and power rate information.

In other words, the artificial intelligence apparatus 100 can predict a power production time zone with high power production efficiency based on environmental information and power production information of a home power generation facility, estimate a time zone with the lowest power rate based on the predicted power production time zone and the remaining power amount information of a home power storage facility and power rate information, and determine a time zone with the lowest estimated power rate as a charging time zone with high charging efficiency.

As another example, if the electronic device is an electronic device 44a that can be moved outside, the artificial intelligence apparatus 100 can determine a charging time zone and charging location with high charging efficiency based on the remaining power information of the home power storage facility, power rate information, external charging station location information, and power rate information of the external charging station.

In other words, the artificial intelligence apparatus 100 can calculate a first power rate corresponding to charging inside a home by hour based on power remaining amount information of a home power storage facility and power rate information, calculate a second power rate corresponding to charging outside a home by hour based on external charging station location information and power rate information of the external charging station, estimate the cheapest charging time zone and charging location by comparing the first and second power rates calculated by hour, and determine a charging time zone and charging location with high charging efficiency based on the estimated cheapest charging time zone and charging location.

At this time, the artificial intelligence apparatus 100 may calculate the second power rate by setting the distance value between the electronic device 44a that can be moved outside and the external charging station as a weight.

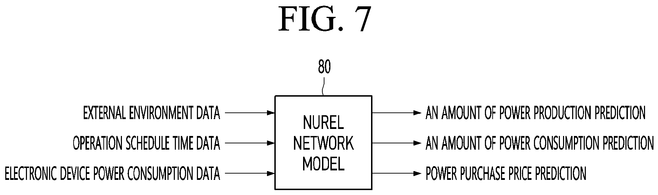

FIG. 7 is a view for explaining a power state prediction process of a neural network model according to an embodiment of the present disclosure.

As illustrated in FIG. 7, the artificial intelligence apparatus 100 can predict the power status corresponding to the operation schedule time zone by inputting external environment data corresponding to the operation schedule time zone of the electronic device, operation schedule time data, and pre-registered power consumption data of the electronic device into a pre-learned neural network model 80.

Here, the neural network model 80 can be pre-learned using environmental data, operation time data of the electronic device, and power consumption data of the electronic device as input values.

The artificial intelligence apparatus 100 can obtain external environmental data including weather, temperature, and seasonal data from an external server and use the obtained external environmental data as input values for a neural network model 80.

In addition, the artificial intelligence apparatus 100 can obtain operation reservation information of an electronic device from at least one of a user terminal, an electronic device, and a user interface of the artificial intelligence apparatus 100, estimate operation schedule time data from the obtained operation reservation information, and use the estimated operation schedule time data as an input value of a neural network model 80.

In addition, the artificial intelligence apparatus 100 can obtain power consumption data of an electronic device from at least one of a user terminal, an electronic device, and a user interface of the artificial intelligence apparatus 100 and use the power consumption data as an input value of a neural network model 80.

Here, the energy information may include at least one of the rated voltage, power consumption, and energy consumption efficiency of the electronic device, and the usage pattern information may include at least one of the number of times the electronic device is used, the usage time of the electronic device, the usage cycle of the electronic device, the usage function of the electronic device, the number of times a specific function is used, the usage time of a specific function, and the usage cycle of a specific function.

In this way, the artificial intelligence apparatus 100 can input external environment data, operation schedule time data, and power consumption data of pre-registered electronic devices into a pre-learned neural network model 80 to predict an amount of power production, an amount of power consumption, and power purchase price in a home corresponding to the operation schedule time.

For example, the artificial intelligence apparatus 100 can predict the power status, including an amount of power production, an amount of power consumption, and power purchase price within the home, at least in one cycle of hourly, minutely, and secondly among the operation schedule time zones.

In addition, the artificial intelligence apparatus 100 can determine an operation time zone with high power usage efficiency among the operation time zones scheduled based on the predicted power status.

Additionally, the artificial intelligence apparatus 100 can determine a charging time zone with high charging efficiency among the operation schedule time zones based on the predicted power status.

Here, the artificial intelligence apparatus 100 can determine a charging time zone with high charging efficiency based on the remaining power information of the electronic device, environmental information, power production information of a home power generation facility, remaining power information of a home power storage facility, power rate information, location information of an external charging station, and power rate information of an external charging station when determining a charging time zone with high charging efficiency.

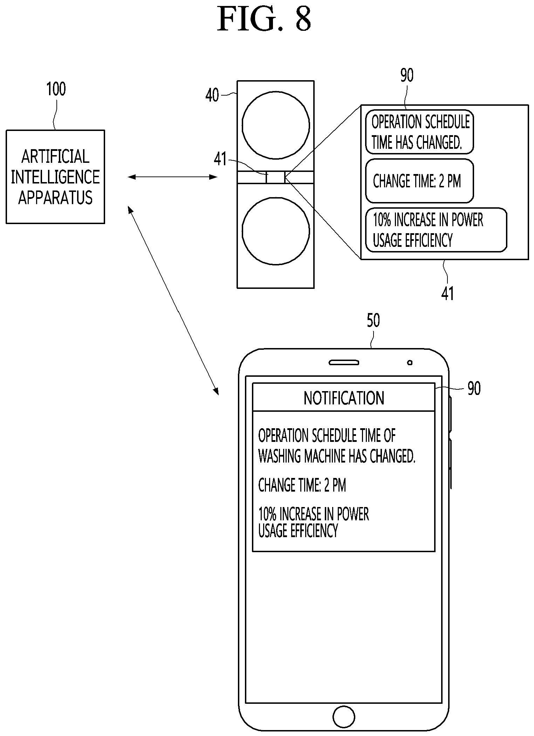

FIG. 8 is a view for explaining a process for changing the operation schedule time zone of an electronic device according to one embodiment of the present disclosure.

As illustrated in Fig. 8, the artificial intelligence apparatus 100 can adjust the operation schedule time zone of the electronic device 40 based on the operation time zone with high power usage efficiency.

The artificial intelligence apparatus 100 compares the operation time zone with high power efficiency with the operation schedule time zone of the electronic device 40, and if the operation time zone with high power efficiency and the operation schedule time zone of the electronic device 40 are different, the operation schedule time zone of the electronic device 40 can be changed to the operation time zone with high power efficiency.

In addition, the artificial intelligence apparatus 100 can maintain the operation schedule time zone of the electronic device without change if the operation schedule time zone of the electronic device is the same as the operation time zone with high power usage efficiency.

In addition, the artificial intelligence apparatus 100 can transmit change notification information 90 to the electronic device 40 to be displayed on the display 41 screen of the corresponding electronic device 40 when the operation schedule time zone of the electronic device 40 is changed.

In some cases, the artificial intelligence apparatus 100 may transmit change notification information 90 to the electronic device 40 to be displayed on the display screen of the user terminal 50 when the operation schedule time zone of the electronic device 40 is changed.

For example, the artificial intelligence apparatus 100 can compare an operation time zone with high power efficiency with an operation schedule time zone pre-stored in the washing machine, and if the operation time zone with high power efficiency and the operation schedule time zone of the washing machine are different, change the operation schedule time zone of the washing machine to the operation time zone with high power efficiency, and then generate change notification information 90 including a message for changing the operation schedule time, a change time, and energy efficiency information due to the change in the operation schedule time, and transmit the change notification information 90 to at least one of an electronic device 40 such as a washing machine and a user terminal 50.

Next, the artificial intelligence apparatus 100 can check whether the operation schedule time zone with high power usage efficiency has arrived when the operation schedule time zone of the electronic device is changed to the operation time zone with high power usage efficiency, and if the operation time zone with high power usage efficiency has arrived, control the operation of the corresponding electronic device 40 based on the operation reservation information stored in advance.

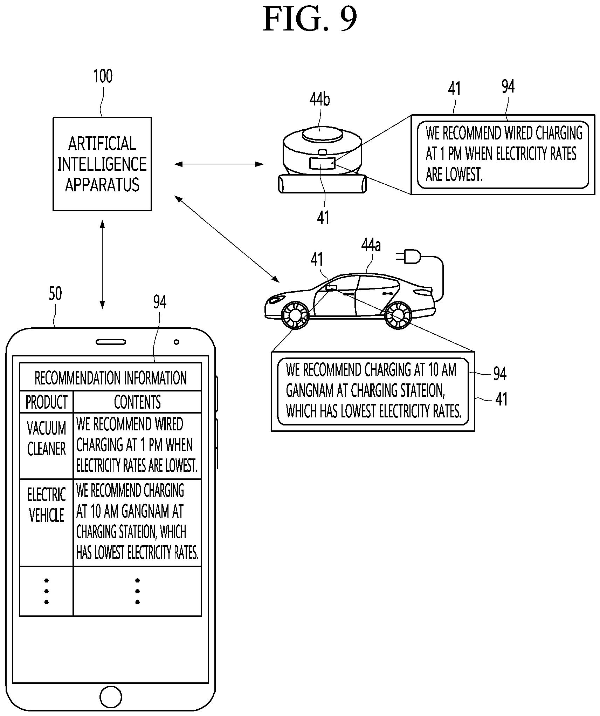

FIG. 9 is a view for explaining a process for providing recommendation information of an electronic device according to one embodiment of the present disclosure.

As illustrated in FIG. 9, the artificial intelligence apparatus 100 can provide recommendation information 94 including the cheapest charging time zone and charging location to at least one of the user terminal 50 and the electronic device 44a that can be moved outside when determining a charging time zone and charging location with high charging efficiency.

In addition, the artificial intelligence apparatus 100 can provide recommendation information 94 including the cheapest charging time zone to at least one of the user terminal 50 and the electronic device 44b that cannot be moved outside when determining a charging time zone with high charging efficiency.

For example, the artificial intelligence apparatus 100, if determining a charging time zone and charging location with high charging efficiency for an electric vehicle, can provide recommended information 94 including the cheapest charging time zone and charging location to the user terminal 50 and the electronic device 44a that can be moved outside to be displayed on the display 41 screen of the user terminal 50 and the electronic device 44a that can be moved outside.

In addition, the artificial intelligence apparatus 100 can provide recommended information 94 including the cheapest charging time zone and charging method to the user terminal 50 and the electronic device 44b that cannot be moved outside to be displayed on the display 41 screen of the user terminal 50 and the electronic device 44b that cannot be moved outside when determining the charging time zone and charging method with the highest charging efficiency for the robot cleaner.

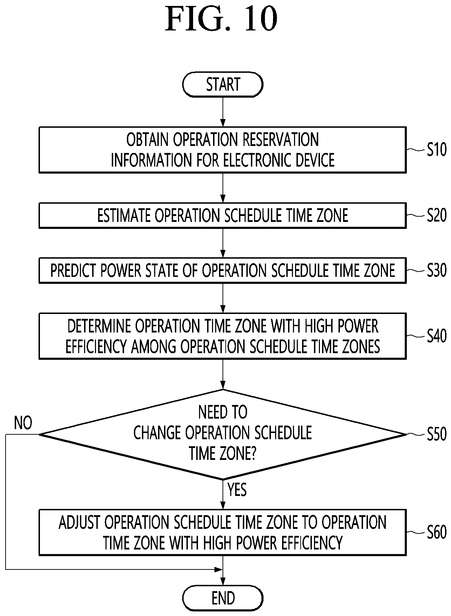

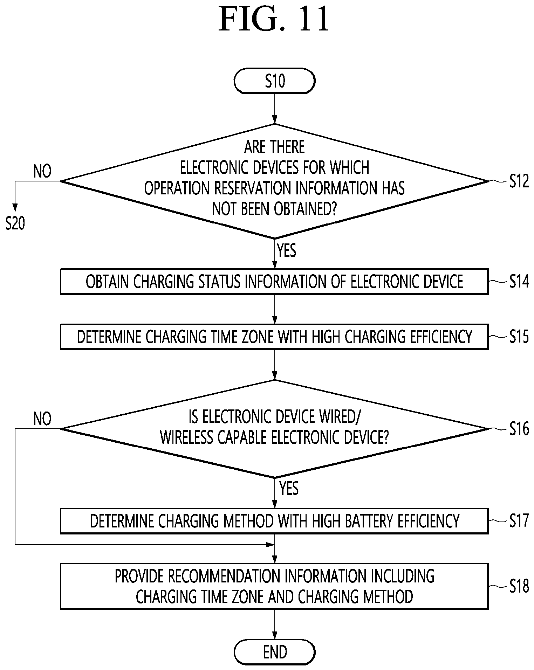

FIGS. 10 and 11 are flowcharts for explaining a method for controlling an electronic device using an artificial intelligence apparatus according to one embodiment of the present disclosure.

As illustrated in Fig. 10, the artificial intelligence apparatus can obtain operation reservation information for a pre-registered electronic device (S10).

In addition, the artificial intelligence apparatus can estimate the operation schedule time zone of the electronic device from the obtained operation reservation information (S20).

Next, the artificial intelligence apparatus can predict the power status corresponding to the estimated operation schedule time zone (S30).

Here, the artificial intelligence apparatus can obtain external environment data including weather, temperature, and seasonal data corresponding to the estimated operation schedule time zone, and input the external environment data, operation schedule time data, and power consumption data of pre-registered electronic devices into a pre-learned neural network model to predict the power status corresponding to the operation schedule time zone.

Next, the artificial intelligence apparatus can determine an operation time zone with high power usage efficiency among the operation schedule time zones based on the predicted power status (S40).

Here, the artificial intelligence apparatus can determine an operation time zone with high power usage efficiency among the operation schedule time zones based on at least one of a first condition corresponding to the amount of power production in a home, a second condition corresponding to the amount of power consumption in a home, and a third condition corresponding to the power purchase price.

Additionally, the artificial intelligence apparatus can determine an operation time zone with high power efficiency among the operation schedule time zones based on a fourth condition corresponding to the user's schedule and activity pattern.

In addition, the artificial intelligence apparatus can determine whether it is necessary to change the operation schedule time zone of an electronic device based on the operation time zone with high power usage efficiency (S50).

Here, the artificial intelligence apparatus can compare the operation time zone with high power efficiency with the operation schedule time zone of the electronic device, and if the operation time zone with high power efficiency and the operation schedule time zone of the electronic device are different, determine that the operation schedule time zone of the electronic device needs to be changed to the operation time zone with high power efficiency.

In addition, the artificial intelligence apparatus can determine that there is no need to change the operation schedule time zone of the electronic device to the operation time zone with high power efficiency when the operation time zone with high power efficiency is the same as the operation schedule time zone of the electronic device.

Next, the artificial intelligence apparatus can adjust the operation schedule time zone of the electronic device to an operation time zone with high power efficiency if a change in the operation schedule time zone of the electronic device is required (S60).

Meanwhile, as illustrated in Fig. 11, the artificial intelligence apparatus can check whether there is an electronic device from which operation reservation information has not been obtained in step S10 of obtaining operation reservation information (S12).

Next, the artificial intelligence apparatus, if there is an electronic device for which operation reservation information has not been obtained, can obtain charging status information of an electronic device (S14).

Next, the artificial intelligence apparatus can determine a charging time zone with high charging efficiency based on the charging status of the electronic device (S15).

In addition, the artificial intelligence apparatus, when determining a charging time zone with high charging efficiency, can check whether the electronic device is a wired/wireless electronic device that can be used both wired and wirelessly (S16).

Next, the artificial intelligence apparatus, if it is a wired/wireless electronic device, can additionally determine a discharge method with high battery efficiency of the wired/wireless electronic device among the wired discharge method and the wireless discharge method (S17).

Next, the artificial intelligence apparatus can provide recommendation information including the cheapest charging time zone and charging method to at least one of the user terminal and the electronic device (S18).

In this way, the artificial intelligence apparatus of the present disclosure can efficiently operate electronic devices by predicting a power status corresponding to the operation schedule time zone of the electronic device and determining an operation time zone with high power usage efficiency.

In addition, the artificial intelligence apparatus of the present disclosure can operate electronic devices to maximize energy efficiency according to the energy status in each home by adjusting the operation schedule time of electronic devices based on the operation time zone with high power usage efficiency.

In addition, the artificial intelligence apparatus of the present disclosure can obtain power information for charging an electronic device and determine a charging time zone and charging location with high charging efficiency, thereby recommending an optimized method for charging an electronic device.

### [Industrial Applicability]

The artificial intelligence apparatus according to the present disclosure has remarkable industrial applicability because it has the effect of efficiently operating electronic devices by predicting the power status corresponding to the operation schedule time of the electronic device and determining an operation time zone with high power usage efficiency.

## Claims

1. An artificial intelligence apparatus comprising:
a memory storing a power status; and,
a processor controlling an electronic device based on the power status,
wherein the processor obtains operation reservation information for a pre-registered electronic device, estimates an operation schedule time zone of the corresponding electronic device from the obtained operation reservation information, predicts a power status corresponding to the estimated operation schedule time zone, determines an operation time zone with high power usage efficiency among the operation schedule time zones based on the predicted power status, and adjusts the operation schedule time zone of the electronic device based on the operation time zone with high power usage efficiency.

2. The artificial intelligence apparatus of claim 1,
wherein the processor, when obtaining operation reservation information for the pre-registered electronic device, obtains operation reservation information including at least one of the operation schedule date, operation schedule time, number of operations, operation motion time, and operation motion intensity for the pre-registered electronic device.

3. The artificial intelligence apparatus of claim 1,
wherein the processor, when obtaining the operation reservation information, checks whether there is an electronic device for which the operation reservation information is not obtained, and if there is an electronic device for which the operation reservation information is not obtained, obtains charging status information of the corresponding electronic device, and determines a charging time zone with high charging efficiency based on the charging status of the electronic device.

4. The artificial intelligence apparatus of claim 3,
wherein the processor, when determining the charging time zone with high charging efficiency, checks whether the electronic device is a wired/wireless electronic device that can be used both wired and wirelessly, and if the electronic device is a wired/wireless electronic device, additionally determines a discharge method with high battery efficiency of the wired/wireless electronic device among the wired discharge method and the wireless discharge method.

5. The artificial intelligence apparatus of claim 3,
wherein the processor, when obtaining the charging status information of the electronic device, if there is an electronic device for which the operation reservation information is not obtained, checks whether the corresponding electronic device is a mobile electronic device including a battery, and, if it is a mobile electronic device including the battery, obtains the battery charging status information of the electronic device.

6. The artificial intelligence apparatus of claim 3,
wherein the processor, when determining the charging time zone with high charging efficiency, determines the charging time zone with high charging efficiency based on the remaining power information of the electronic device, environmental information, power production information of the home power generation facility, remaining power information of the home power storage facility, power rate information, external charging station location information, and power rate information of the external charging station.

7. The artificial intelligence apparatus of claim 6,
wherein the processor determines whether the electronic device needs to be charged based on the remaining power information of the electronic device, and if the electronic device needs to be charged, checks whether the electronic device is an electronic device that cannot be moved outside, and if the electronic device is an electronic device that cannot be moved outside, determines a charging time zone with high charging efficiency based on the environmental information, power production information of a home power generation facility, power remaining information of a home power storage facility, and power rate information.

8. The artificial intelligence apparatus of claim 6,
wherein the processor determines whether the electronic device needs to be charged based on the remaining power information of the electronic device, and if the electronic device needs to be charged, checks whether the electronic device is an electronic device that can be moved outside, and if the electronic device is an electronic device that can be moved outside, determines a charging time zone and a charging location with high charging efficiency based on the remaining power information of the home power storage facility, power rate information, external charging station location information, and power rate information of the external charging station.

9. The artificial intelligence apparatus of claim 8,
wherein the processor, when determining the charging time zone and charging location with high charging efficiency, calculates a first power rate corresponding to charging inside the home by hour based on the remaining power information and power rate information of the home power storage facility, calculates a second power rate corresponding to charging outside the home by hour based on the location information of the external charging station and the power rate information of the external charging station, estimates the cheapest charging time zone and charging location by comparing the first and second power rates calculated by hour, and determines the estimated cheapest charging time zone and charging location as the charging time zone and charging location with the highest charging efficiency.

10. The artificial intelligence apparatus of claim 1,
wherein the processor, when predicting the power status, obtains external environment data including weather, temperature, and seasonal data corresponding to the estimated operation schedule time zone, and inputs the external environment data, operation schedule time data, and power consumption data of the pre-registered electronic device into a pre-learned neural network model to predict the power status corresponding to the operation schedule time zone.

11. The artificial intelligence apparatus of claim 10,
wherein the predicted power status includes an amount of power production, an amount of power consumption, and power purchase price in a home corresponding to the operation schedule time zone.

12. The artificial intelligence apparatus of claim 1,
wherein the processor, when determining the operation time zone with high power usage efficiency, determines the operation time zone with high power usage efficiency among the operation schedule time zone based on at least one of a first condition corresponding to the amount of power production in a home, a second condition corresponding to the amount of power consumption in a home, and a third condition corresponding to the power purchase price.

13. The artificial intelligence apparatus of claim 26,
wherein the processor, when determining the operation time zone with high power usage efficiency, determines the operation time zone with high power usage efficiency among the operation schedule time zone based on a fourth condition corresponding to the user's schedule and activity pattern.

14. The artificial intelligence apparatus of claim 1,
wherein the processor, when adjusting the operation schedule time zone of the electronic device, compares the operation time zone with high power usage efficiency with the operation schedule time zone of the electronic device, and if the operation time zone with high power usage efficiency and the operation schedule time zone of the electronic device are different, changes the operation schedule time zone of the electronic device to the operation time zone with high power usage efficiency.

15. A method for controlling an artificial intelligence apparatus using an electronic device, comprising:
obtaining operation reservation information for a pre-registered electronic device;
estimating an operation schedule time zone of the electronic device from the obtained operation reservation information;
predicting a power status corresponding to the estimated operation schedule time zone;
determining an operation time zone with high power usage efficiency among the operation schedule time zones based on the predicted power status; and
adjusting an operation schedule time zone of the electronic device based on the operation time zone with high power usage efficiency.
